# EUROPEAN PATENT APPLICATION

(11) **EP 4 776 721 A1**
(43) Date of publication of application: **15.07.2026**
(21) Application number: 24862520.4
(22) Date of filing: 08.08.2024
(51) Int. Cl.: H04W 72/0453, H04L 27/26, H04W 72/23, H04W 72/54, H04W 72/56, H04W 74/0816, H04W 84/12

(54) **ACCESS POINT, TERMINAL, AND COMMUNICATION METHOD**

(30) Priority: 07.09.2023 JP 2023145581
(71) Applicant: Panasonic Intellectual Property Corporation of America, Torrance, CA 90504 (US)
(72) Inventor: MINOTANI, Jun, Kadoma-shi, Osaka 571-0057 (JP); IWAI, Takashi, Kadoma-shi, Osaka 571-0057 (JP); TAKATA, Tomofumi, Kadoma-shi, Osaka 571-0057 (JP)
(74) Representative: Grünecker Patent- und Rechtsanwälte PartG mbB
(86) International application number: PCT/JP2024/028548
(87) International publication number: WO 2025/052866

(57) **Abstract**

This access point includes: a transmission circuit that transmits control information related to communication using a second channel which does not include a first channel that is a primary channel; and a control circuit that, on the basis of the control information, controls transmission or reception in communication.

## Description

### Technical Field

The present disclosure relates to an access point, a terminal, and a communication method.

### Background Art

As a successor standard to the Institute of Electrical and Electronics Engineers (IEEE) 802.11be (hereinafter, referred to as "11be"), which is a standard of IEEE 802.11, a technical specification of IEEE 802.11bn (hereinafter, referred to as "11bn") is being developed in a Study Group (SG). 11be is also referred to as "Extremely High Throughput (EHT)." Further, 11bn is also referred to as "Ultra High Reliability (UHR)."

### Citation List

### Non-Patent Literature

NPL 1
   IEEE Std 802.11^{™}/2020
NPL 2
   IEEE 802.11-23/0079r10, IEEE 802.11 UHR Proposed CSD
NPL 3
   IEEE 802.11-23/0797r1, Non-Primary Channel Access

### Summary of Invention

However, a control method for channel access in radio communication, such as a radio LAN has not been sufficiently studied.

One non-limiting exemplary embodiment of the present disclosure facilitates providing an access point, a terminal, and a communication method each capable of improving the efficiency of channel access control in radio communication.

An access point according to one exemplary embodiment of the present disclosure includes: transmission circuitry, which, in operation, transmits control information related to communication using a channel not including a first channel, the channel being referred to as a second channel, the first channel being a primary channel; and control circuitry, which, in operation, controls transmission or reception in the communication based on the control information.

It should be noted that general or specific embodiments may be implemented as a system, an apparatus, a method, an integrated circuit, a computer program, a storage medium, or any selective combination thereof.

According to one exemplary embodiment of the present disclosure, for example, the efficiency of channel access control in radio communication can be improved.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of the Drawings

FIG. 1 is a diagram illustrating an operation example of clear channel access (CCA);
FIG. 2 is a diagram illustrating a configuration example of a signal detection (SD) threshold value and an energy detection (ED) threshold value;
FIG. 3 is a diagram illustrating a configuration example of a primary channel and a secondary channel;
FIG. 4 is a diagram illustrating an example of non-primary channel access;
FIG. 5 is a diagram illustrating an operation example of non-primary channel access;
FIG. 6 is a block diagram illustrating a configuration example of a part of an access point (AP);
FIG. 7 is a block diagram illustrating a configuration example of a part of a terminal (station (STA));
FIG. 8 is a diagram illustrating an example of a transmission and reception sequence by an AP and an STA;
FIG. 9 is a diagram illustrating an example of non-primary channel access (NPCA) control information;
FIG. 10 is a diagram illustrating a notification example of a secondary channel by the NPCA control information;
FIG. 11 is a diagram illustrating an example of NPCA control information;
FIG. 12 is a diagram illustrating a notification example of a secondary channel by NPCA control information;
FIG. 13 is a diagram illustrating an example of signaling for notifying of a priority of a secondary channel in NPCA;
FIG. 14 is a diagram illustrating a notification example of a priority of a secondary channel in NPCA;
FIG. 15 is a diagram illustrating an operation example of non-primary channel access;
FIG. 16 is a diagram illustrating an operation example of non-primary channel access;
FIG. 17 is a block diagram illustrating a configuration example of the AP;
FIG. 18 is a block diagram illustrating a configuration example of the STA (terminal);
FIG. 19 is a diagram illustrating a configuration example of a contention window (CW);
FIG. 20 is a diagram illustrating a configuration example of a backoff time;
FIG. 21 is a diagram illustrating a configuration example of a CCA threshold value;
FIG. 22 is a diagram illustrating a configuration example of a transmission opportunity (TXOP) limit; and
FIG. 23 is a diagram illustrating a configuration example of the TXOP limit.

### Description of Embodiments

Hereinafter, embodiments of the present disclosure will be described in detail with reference to the accompanying drawings.

In the standards up to 11be (e.g., Wi-Fi (registered trade mark) standards), when an access point (Access Point (AP) or also referred to as a base station) or a terminal connected (or associated) with an AP (a non-AP station, hereinafter referred to as "STA") performs transmission, a channel that includes a primary 20 MHz channel (also referred to as a "primary channel") determined for each network (Basic Service Set (BSS)) to which at least one of the AP and/or STA (hereinafter also referred to as "AP/STA") belongs is used.

For example, the AP that performs downlink (DL) communication checks whether another AP/STA currently communicating on the primary 20 MHz channel is present by carrier sense multiple access with collision avoidance (CSMA/CA). In CSMA/CA, the AP starts transmission when determining that transmission can be performed while avoiding a collision with communication by another AP/STA, by using two types of carrier sense, that is, physical carrier sense and virtual carrier sense (e.g., see Non-Patent Literature (hereinafter, referred to as "NPL") 1).

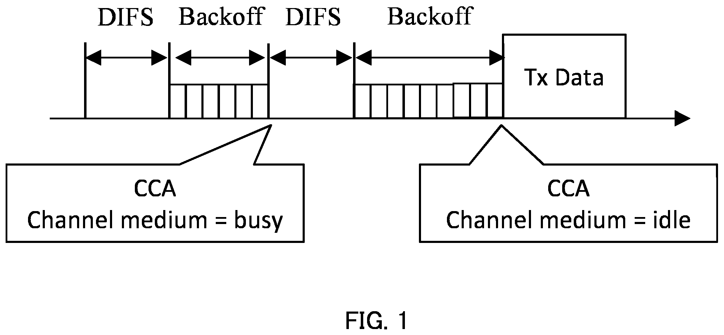

In physical carrier sense, for example, clear channel access (CCA) is used. As illustrated in FIG. 1, CCA is performed after waiting for a predetermined time (e.g., Distributed Coordination Function Inter Frame Space (DIFS)) for each data type and after waiting until a backoff counter randomly determined from a predetermined range becomes 0. Hereinafter, the waiting time until the backoff counter becomes 0 is also referred to as a "backoff time". In CCA, whether the channel is available is determined by using a power level (e.g., received signal strength indicator (RSSI)) of the channel. The CCA is, for example, an operation of determining a state (e.g., idle or busy) of a channel medium.

For example, in a case where the RSSI of the channel is equal to or higher than a threshold value (e.g., signal detection (SD) threshold value (e.g., -82 dBm. Preamble detection (PD) threshold value) is equal to or higher than a predetermined value, the AP/STA attempts to detect a preamble of the Wi-Fi standard on the channel. In a case where the preamble is detected, the AP/STA determines that "channel medium = busy" because another AP/STA is using the channel, and waits for a backoff time randomly determined again. The SD threshold value may be defined as the same power level as minimum modulation and coding scheme (MCS) sensitivity (sensitivity). The CCA using an SD threshold value is also referred to as CCA-PD.

Meanwhile, in a case where no preamble is detected on the channel, the AP/STA determines that the signal is different from the Wi-Fi standards, and in a case where the signal is equal to or higher than a threshold value (e.g., energy detection (ED) threshold value (e.g., -62 dBm)), the AP/STA determines that the interference received from the signal different from the Wi-Fi standards on the channel is large, and determines that "channel medium = busy" (e.g., transmission is impossible), and waits for a backoff time randomly determined again. The CCA using an ED threshold value is also referred to as CCA-ED.

Further, for example, in a case where no preamble is detected on the channel and the RSSI is smaller than the ED threshold value, the AP/STA determines that the interference received from the signal different from the Wi-Fi standards is small, and determines that "channel medium = idle" (e.g., transmission is possible). Alternatively, the AP/STA also determines that "channel medium = idle" in a case where the RSSI of the channel is smaller than the SD threshold value.

In a case where the primary 20 MHz channel is determined to be "channel medium = idle" by CCA, for example, the AP/STA may perform CCA on a channel (hereinafter, referred to as a "secondary channel") adjacent to the primary 20 MHz channel, and determine whether transmission of bundled channels (referred to as channel bonding) is possible. For example, in a case where the secondary 20 MHz channel adjacent to the primary channel is "channel medium = idle", the AP/STA performs transmission by using the primary 20 MHz channel and the secondary 20 MHz channel to use a 40 MHz frequency resource. Further, for example, in a case where the secondary 20 MHz channel is "channel medium = busy", the AP/STA performs transmission by using the primary 20 MHz channel without using the secondary 20 MHz channel.

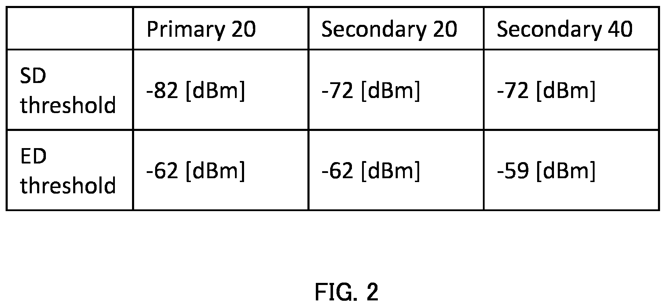

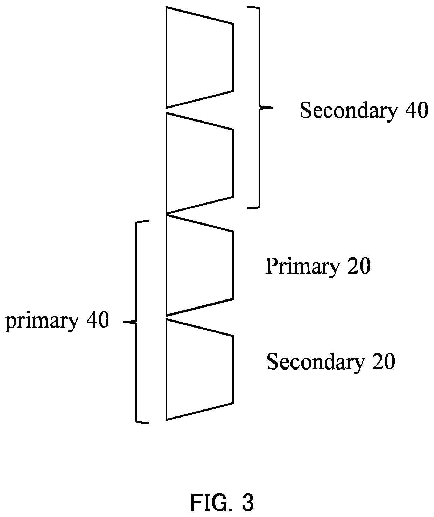

FIG. 2 illustrates examples of the SD threshold value and the ED threshold value of the primary channel and the secondary channel. Here, for a frequency resource larger than 20 MHz, whether the channel is a primary channel or a secondary channel is determined depending on whether the channel includes the primary 20 MHz channel. For example, as illustrated in FIG. 3, when an 80 MHz frequency resource is used, a 40 MHz channel configured by a primary 20 MHz channel (also referred to as "primary 20") and a secondary 20 MHz channel (also referred to as "secondary 20") is referred to as "primary 40". Further, a 40 MHz channel that does not include the primary 20 MHz channel is referred to as "secondary 40".

The physical carrier sense has been described above.

In the virtual carrier sense, the AP determines whether transmission is possible based on information (hereinafter, referred to as channel usage period information) on a usage period of a channel included in a signal of another AP/STA detected on the primary channel. For example, the AP acquires the channel usage period information from a Duration field included in a media access control (MAC) header and configures a network allocation vector (NAV) having the same time length as the Duration field. A transmission prohibition period is configured for a period for which the NAV is configured. The virtual carrier sense may be performed on the primary 20 MHz channel and may not be performed on other channels.

The virtual carrier sense has been described above.

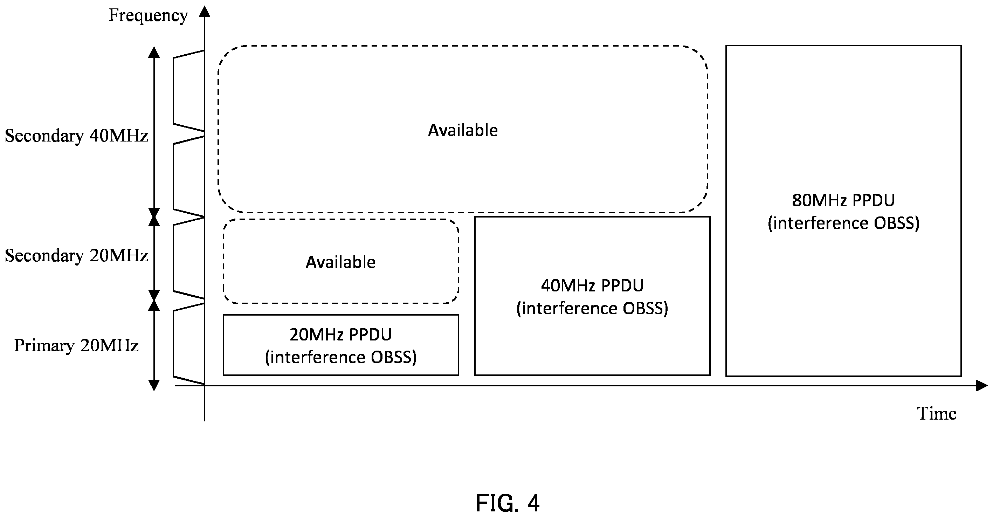

In 11bn, "non-primary channel access (NPCA)" has been discussed, in which communication of transmission or reception using a channel that does not include the primary 20 MHz channel is performed (e.g., see NPLs 2 and 3). In the non-primary channel access, when the primary 20 MHz channel is "channel medium = busy" due to an interference signal or a signal of a network (referred to as an overlapped basic service set (OBSS)) managed by another AP as illustrated in FIG. 4, transmission is performed by using a channel (e.g., secondary channel) different from the available primary channel, so that the frequency utilization efficiency can be improved.

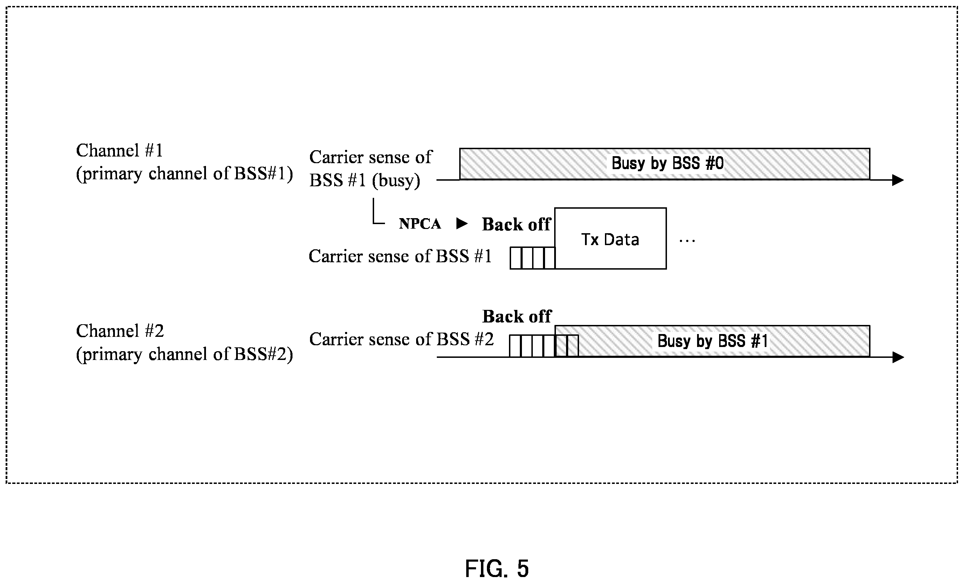

However, a control method for the non-primary channel access has not been sufficiently studied. Further, the non-primary channel access may impair fairness of transmission opportunities between the AP/STA that supports the non-primary channel access and the AP/STA that does not support the non-primary channel access. For example, as illustrated in FIG. 5, when the AP/STA of BSS#1 cannot use channel#1 that is the primary channel of BSS#1 (e.g., when BSS#0 is busy), the AP/STA of BSS#1 attempts transmission in channel#2 that is the primary channel of BSS#2 by non-primary channel access. In this case, when the AP/STA of BSS#1 acquires a transmission opportunity in channel#2 by physical carrier sense, the AP/STA of BSS#2 that does not perform non-primary channel access may lose the transmission opportunity.

In one non-limiting exemplary embodiment of the present disclosure, a method for improving the frequency utilization efficiency in control related to the non-primary channel access will be described. For example, controlling (e.g., reducing) the transmission priority of the non-primary channel access makes it possible to ensure fairness of the transmission opportunities between the AP/STA that supports the non-primary channel access and the AP/STA that does not support the non-primary channel access.

### [Configuration of Radio Communication System]

The radio communication system according to one embodiment of the present disclosure may include, for example, at least one AP 100 and at least one STA 200. For example, AP 100 transmits a downlink (DL) signal to another AP or STA 200. Further, STA 200 transmits an uplink (UL) signal based on the signal received from AP 100.

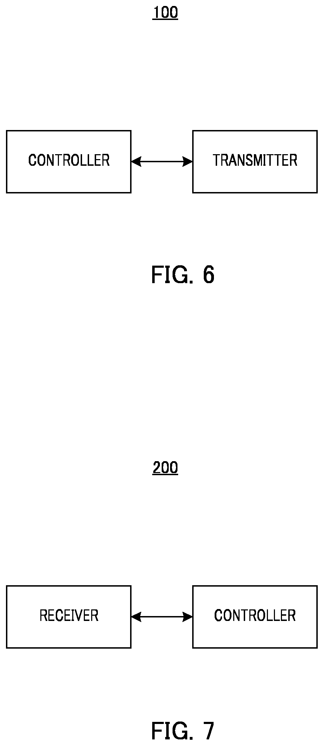

FIG. 6 is a block diagram illustrating a configuration example of a part of AP 100 according to one embodiment of the present disclosure. In AP 100 illustrated in FIG. 6, a transmitter (e.g., corresponding to transmission circuitry) transmits control information related to communication (e.g., non-primary channel access) using a second channel (e.g., secondary channel) that does not include a first channel that is a primary channel. A controller (e.g., corresponding to control circuitry) controls transmission or reception in the communication based on the control information.

FIG. 7 is a block diagram illustrating a configuration example of a part of STA 200 according to one embodiment of the present disclosure. In STA 200 illustrated in FIG. 7, a receiver (e.g., corresponding to reception circuitry) receives the control information related to communication (e.g., non-primary channel access) using the second channel (e.g., secondary channel) that does not include the first channel that is the primary channel. A controller (e.g., corresponding to control circuitry) controls reception or transmission in the communication based on the control information.

[Operation Example of AP 100 and STA 200] In one embodiment of the present disclosure, AP 100 notifies STA 200 under AP 100 of the control information related to the non-primary channel access (hereinafter, also referred to as non-primary channel access (NPCA) control information).

Hereinafter, as an example, a method for transmitting the non-primary channel access control information from AP 100 to STA 200 under AP 100 and transmitting and receiving a signal in a channel (e.g., a non-primary channel) different from the primary channel will be described.

Hereinafter, the channel (e.g., a channel that does not include the primary channel) different from the primary channel is referred to as a "secondary channel". The channel different from the primary channel is also referred to as a second primary channel, a sub primary channel, or a subband.

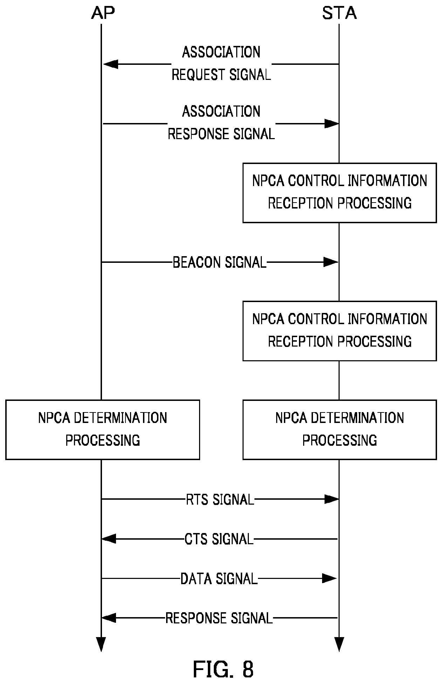

An operation example of AP 100 and STA 200 will be described. FIG. 8 is a sequence diagram illustrating the operation example of AP 100 (referred to as AP) and STA 200 (referred to as STA).

For example, non-primary channel access (NPCA) control information may be included in a Management frame (e.g., Beacon, Probe response, Association/Reassociation response, or the like) and notified.

In the example of FIG. 8, STA 200 transmits an association request signal to AP 100. AP 100 may include the NPCA control information in an association response signal to the association request signal from STA 200 and notify STA 200. Further, for example, AP 100 may include the NPCA control information in a beacon signal that is one of the management frames and perform broadcast transmission to the AP/STA within a transmission range. For example, AP 100 may determine the NPCA control information of the BSS to which AP 100 belongs, based on the NPCA control information included in the beacon signal from another AP.

When receiving the NPCA control information (e.g., association response signal or beacon signal), STA 200 performs reception processing of the NPCA control information. For example, the NPCA control information may include at least one of information related to a channel (e.g., secondary channel) used in the non-primary channel access and/or information related to an operation method (e.g., operation type) of the non-primary channel access.

The AP/STA that has acquired the NPCA control information performs NPCA determination processing using the NPCA control information. In the NPCA determination processing, the AP/STA determines, for example, whether the AP/STA can acquire a transmission right (e.g., a transmission opportunity (TXOP)) in the secondary channel by the physical and/or virtual carrier sense in the secondary channel. As an example, the AP/STA may start carrier sense (e.g., a backoff operation) in the secondary channel in a case where the AP/STA does not acquire the transmission right by the physical and virtual carrier sense in the primary channel.

In the example of FIG. 8, in the NPCA determination processing, an example is illustrated in which AP 100 acquires the transmission right of the secondary channel and transmits a DL signal to STA 200.

In this case, AP 100 transmits a request to send (RTS) signal to STA 200 by using the secondary channel. When receiving the RTS signal in the secondary channel, STA 200 transmits (responds) a clear to send (CTS) signal to AP 100 by using the secondary channel. AP 100 can discriminate STA 200 that can transmit and receive the signal in the secondary channel, by receiving the CTS signal. AP 100 transmits a data signal to STA 200 by using the secondary channel to STA 200 that can transmit and receive the signal in the secondary channel. When receiving the data signal in the secondary channel, STA 200 transmits a response signal (referred to as an acknowledge (ACK) signal) to the data signal to AP 100.

In NPCA, a bandwidth (e.g., 20 MHz) of a channel (e.g., a secondary channel, an alternative primary channel) on which the physical and/or virtual carrier sense (e.g., the backoff operation) is performed and a bandwidth (e.g., 20/40/80/160/320 MHz) of a channel (e.g., the secondary channel, the NPCA channel) on which the frame transmission is performed may be different. The AP/STA (e.g., the AP of FIG. 8) may acquire the transmission right based on a result of CCA in the alternative primary channel, determine a transmission bandwidth based on a result of CCA in each 20 MHz channel included in the NPCA channel, and transmit a frame (e.g., RTS, CTS, trigger, BSRP, data frame, or multiuser (MU) physical layer protocol data unit (PPDU)).

### [Example of Non-Primary Channel Access Control Information]

For example, the NPCA control information may include information related to a channel (e.g., a secondary channel) different from the primary channel used in the non-primary channel access operation.

For example, the NPCA control information may notify information related to the secondary channel for each band (e.g., a 2.4 GHz band, a 5 GHz band, and a 6 GHz band). The information related to the secondary channel included in the NPCA control information may notify two or more secondary channels in one band. The information related to the secondary channel may include any one or both of information on a channel (e.g., one or a plurality of 20 MHz channels) on which the physical/virtual carrier sense (e.g., backoff operation) is performed in the NPCA and information indicating a channel on which the frame transmission is performed in the NPCA (which may be a channel having a bandwidth of any of 20/40/80/160/320 MHz and not including the primary channel). The channel on which the physical/virtual carrier sense (e.g., backoff operation) is performed in the NPCA may be referred to as a non-primary channel, an alternative primary channel, a temporary primary channel, an anchor channel, or the like. The channel on which the frame transmission is performed in the NPCA may be referred to as an NPCA channel.

Further, the secondary channel may be a channel included in an operating channel band of BSS or a channel not included in an operating band of BSS. In one embodiment of the present disclosure, as an example, the secondary channel will be described as a channel included in the operating channel band.

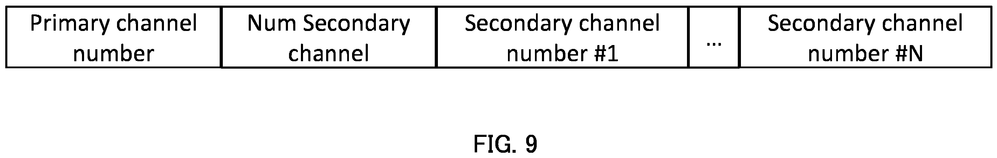

For example, in the NPCA control information, the secondary channel may be notified of by a channel number. FIG. 9 illustrates a signaling example of the NPCA control information in a case where the NPCA control information includes information related to the channel number of the secondary channel. The NPCA control information illustrated in FIG. 9 includes a channel number of the primary channel ("Primary channel number"), a number of secondary channels ("Num Secondary channel"), and channel numbers of the secondary channels equal to the number of secondary channels ("Secondary channel number #1 to #N").

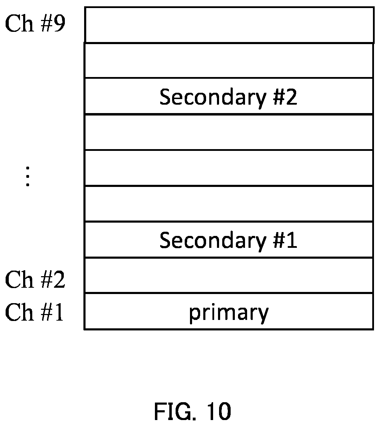

For example, as illustrated in FIG. 10, the secondary channel used for the non-primary channel access may be notified by the number of channels (e.g., two) of secondary channels and the channel numbers (e.g., Ch#3 and Ch#7).

Notifying the secondary channel by the channel number makes it possible to flexibly notify a plurality of secondary channels.

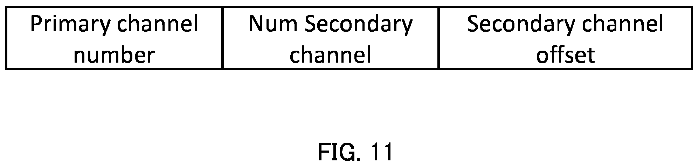

Further, for example, in the NPCA control information, the secondary channel may be notified by a constant offset interval from the primary channel. FIG. 11 illustrates a signaling example of the NPCA control information in a case where the NPCA control information includes information related to an offset value (a constant offset interval) from the primary channel for the secondary channel. The NPCA control information illustrated in FIG. 11 includes a channel number of the primary channel ("Primary channel number"), the number of secondary channels ("Num Secondary channel"), and an offset value ("Secondary channel offset") for notifying an interval between the primary channel and the secondary channel.

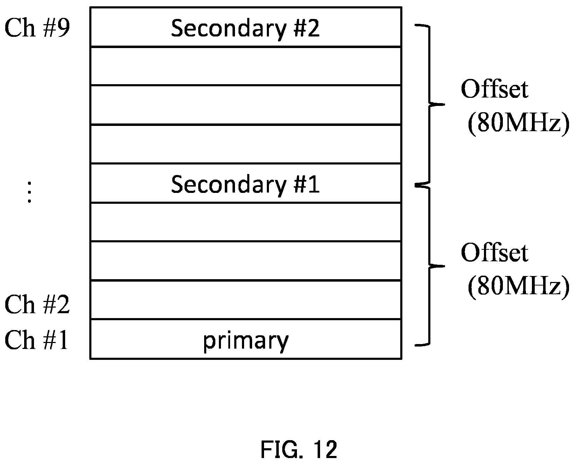

For example, as illustrated in FIG. 12, the secondary channel may be notified of by a constant offset interval from the primary channel. In the example of FIG. 12, the offset interval is configured to 80 MHz, and the interval between the primary channel and the secondary channel and the interval between the secondary channels are notified at an interval of 80 MHz. The offset value may be represented by a bandwidth (80 MHz in the example of FIG. 12) or may be represented by the number of channels (four channels in the example of FIG. 12).

The method of notifying the secondary channel by the offset interval can reduce a signaling amount as compared with the method of notifying the secondary channel by the channel number.

The information related to the secondary channel notified by the NPCA control information is not limited to the examples illustrated in FIGS. 10 and 12. For example, the information related to the primary channel may not be included in the NPCA control information and may be separately notified to STA 200. Further, in the signaling example illustrated in FIG. 11, a case where the primary channel, the number of secondary channels, and the offset value for the primary channel are notified has been described, but the present disclosure is not limited to this. For example, a certain secondary channel, the number of secondary channels, and the offset value for the certain secondary channel may be notified.

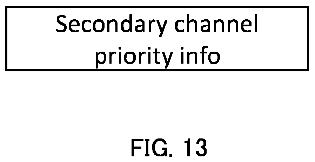

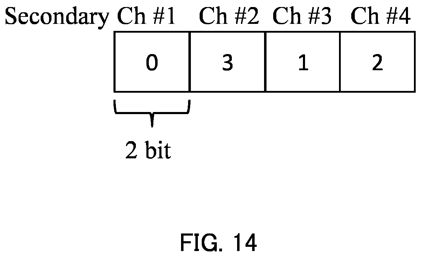

Further, in any of the methods of notifying the secondary channel, a priority of each secondary channel that can be used for the NPCAmay be notified. For example, secondary channel priority infor as illustrated in FIG. 13 may be included in the NPCA control information. For example, as illustrated in FIG. 14, the secondary channel priority infor may notify the priority of each secondary channel that can be used for the NPCA in ascending order. The signaling (field) of the secondary channel priority infor may have a fixed length. Alternatively, the signaling (field) of the secondary channel priority infor may be variable according to the number of secondary channels notified by the Num Secondary channel included in the NPCA control information. For example, in the example of FIG. 14, the priority of each secondary channel is notified by 2 bits, but in a case where the number of secondary channels is 5 or more, the priority of each secondary channel may be notified by 3 bits.

### [NPCA Operation Method]

The NPCA operation method may be determined by, for example, AP 100 based on the capability information (capability) of AP 100 and STA 200. For example, STA 200 notifies AP 100 of the capability information of STA 200. The capability information may be included in, for example, a probe request signal or an association request signal and may be notified to AP 100. The capability information may include information indicating whether AP 100 and STA 200 support NPCA. Further, the capability information may include information indicating a maximum transmission bandwidth in the NPCA (e.g., frame/PPDU transmission in the secondary channel). Further, the capability information may include information indicating the number of channels on which AP 100 and STA 200 can perform the carrier sense. Further, the capability information may include information indicating the NPCA operation method supported by AP 100 and STA 200.

The NPCA control information may include, for example, information related to the determined NPCA operation method (or operation type).

For example, in a case where the AP/STA can perform the physical carrier sense on a plurality of channels simultaneously, the AP/STA may perform the physical carrier sense simultaneously on the primary channel and the secondary channel.

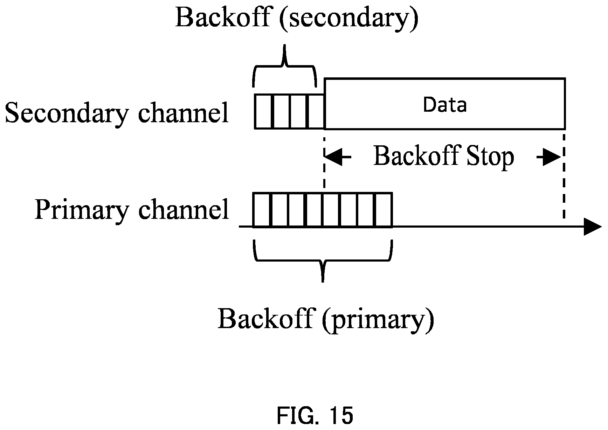

FIG. 15 illustrates an operation example in a case where the physical carrier sense is performed simultaneously on the primary channel and the secondary channel. For example, the AP/STA that can perform the physical carrier sense simultaneously on the primary channel and the secondary channel may configure a backoff counter randomly in each of the primary channel and the secondary channel and perform transmission by using a channel in which the backoff counter becomes 0 first. In the example of FIG. 15, since the backoff of the secondary channel is smaller than the backoff of the primary channel, the AP/STA transmits the data by using the secondary channel.

In a case where the backoff counter becomes 0 and the transmission right (transmission opportunity (TXOP)) is acquired in any channel (secondary channel in the example of FIG. 15), the AP/STA stops the subtraction of the backoff counter of another channel (primary channel in the example of FIG. 15) until the TXOP ends. Further, in a case where the physical carrier sense is performed simultaneously on the primary channel and the secondary channel, the same value as the threshold value configured in the primary channel may be used as the ED threshold value and the SD threshold value of the physical carrier sense of the secondary channel.

As described above, as one of the NPCA operation methods (or operation types), a method (type) of performing NPCA in a case where the backoff counter (or backoff time) of the secondary channel becomes 0 may be included.

Further, for example, in a case where the AP/STA can perform the physical carrier sense on one channel (e.g., in a case where the AP/STA cannot perform the physical carrier sense on a plurality of channels simultaneously), the AP/STA may perform the physical carrier sense in the secondary channel in a case where the channel medium of the primary channel is busy.

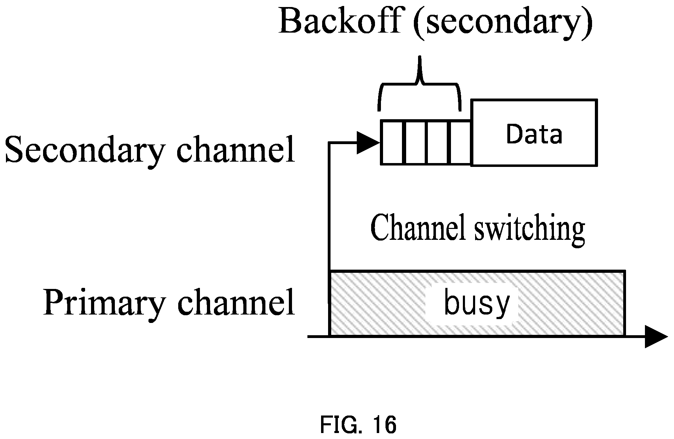

FIG. 16 illustrates an operation example in a case where transmission is performed by using the secondary channel in a case where the primary channel is busy. For example, in a case where the primary channel is determined to be "channel medium = busy" by the physical carrier sense of the primary channel, the AP/STA switches the channel on which the physical carrier sense is performed to the secondary channel. Thereafter, in a case where the backoff counter randomly configured in the secondary channel becomes 0 in the same manner as in the primary channel, the AP/STA acquires the TXOP and transmits the data in the secondary channel.

As described above, as one of the NPCA operation methods (or operation types), a method (type) of performing the NPCAin a case where the carrier sense result of the primary channel is busy and the backoff counter (or backoff time) of the secondary channel becomes 0 may be included.

The NPCA control information may include, for example, information related to an operation available time of the NPCA. For example, in a case where the non-primary channel access is possible only when the channel medium of the primary channel is busy, the operation available time of the NPCA may be configured (or limited) to a time length not greater than a time length (e.g., a TXOP length of the OBSS using the primary channel) in which the channel medium of the primary channel is busy. Further, for example, the operation available time of the NPCA may be configured to a period not greater than a transmission prohibition period (or NAV timer) in the primary channel. Further, the operation available time of the NPCA may be notified by a duration field of a MAC header of a signal transmitted by the AP/STA in the secondary channel.

Further, in the operation example of AP 100 and STA 200 according to one embodiment of the present disclosure, the example has been described in which, when the transmission is performed by using the secondary channel in the non-primary channel access, AP 100 discriminates STA 200 that can transmit by transmitting and receiving the RTS/CTS, but the signal used for the discrimination of STA 200 that can transmit may be another signal. For example, AP 100 may transmit a buffer status report poll (BSRP), and STA 200 may respond to BSR. AP 100 may receive the BSR from STA 200 to discriminate the UL transmission request of STA 200 and may transmit a trigger frame signal prompting STA 200 to perform the UL transmission. Further, for example, AP 100 and STA 200 may determine (e.g., independently determine) whether to perform the non-primary channel access based on the results of the carrier sense performed by AP 100 and STA 200, respectively. In this case, the AP/STA that performs the transmission and reception in the secondary channel may transmit the BSRP or the RTS before the transmission of the data signal and may discriminate whether the destination AP/STA uses the same channel according to the presence or absence of the response (e.g., BSR or CTS) to the BSRP or the RTS.

### [Configuration Example of AP 100]

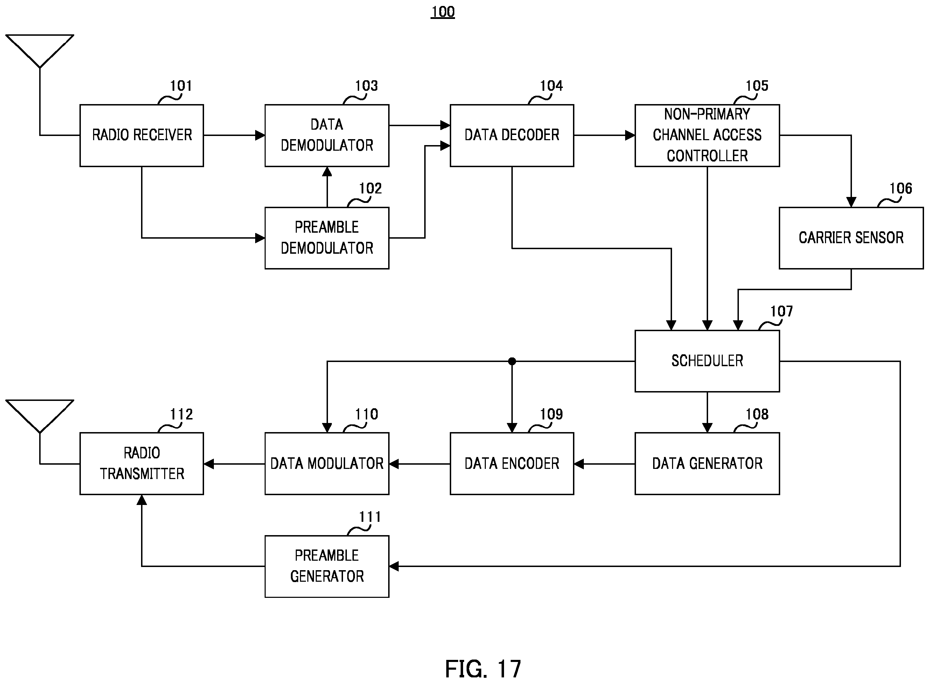

FIG. 17 is a block diagram illustrating a configuration example of AP 100 (e.g., downlink radio transmission apparatus).

AP 100 illustrated in FIG. 17 may include, for example, radio receiver 101, preamble demodulator 102, data demodulator 103, data decoder 104, non-primary channel access controller 105, carrier sensor 106, scheduler 107, data generator 108, data encoder 109, data modulator 110, preamble generator 111, and radio transmitter 112.

At least one of preamble demodulator 102, data demodulator 103, data decoder 104, non-primary channel access controller 105, carrier sensor 106, scheduler 107, data generator 108, data encoder 109, data modulator 110, and/or preamble generator 111 illustrated in FIG. 17 may be included in the controller illustrated in FIG. 6, and radio transmitter 112 illustrated in FIG. 17 may be included in the transmitter illustrated in FIG. 6.

In FIG. 17, radio receiver 101 receives a signal transmitted from STA 200 (e.g., a downlink radio reception apparatus) via an antenna and performs radio reception processing such as downconversion and analog-to-digital (A/D) conversion. Radio receiver 101 divides the signal after the radio reception processing into a preamble portion (also referred to as preamble signal) and a data portion (also referred to as data signal), outputs the preamble signal to preamble demodulator 102, and outputs the data signal to data demodulator 103.

Preamble demodulator 102 performs Fourier transform (e.g., Fast Fourier transform (FFT)) on the preamble signal input from radio receiver 101, and extracts reception control information (e.g., frequency bandwidth (BW), modulation and coding scheme (MCS), and error correction code) used for demodulation and decoding of the data signal. Further, preamble demodulator 102 performs channel estimation based on a reference signal included in the preamble signal and derives a channel estimation value. Preamble demodulator 102 outputs the reception control information to data demodulator 103 and data decoder 104, and outputs the channel estimation value to data demodulator 103.

Data demodulator 103 performs FFT on the data signal input from radio receiver 101, and demodulates the data signal using the reception control information and the channel estimation value input from preamble demodulator 102. Data demodulator 103 outputs the demodulated data signal to data decoder 104.

Data decoder 104 decodes the demodulated data signal input from data demodulator 103 using the reception control information input from preamble demodulator 102. Data decoder 104 performs error determination on the decoded data signal using a method such as cyclic redundancy check (CRC). In a case where there is no error in the decoded data signal, data decoder 104 outputs the decoded data signal to non-primary channel access controller 105 and scheduler 107.

Non-primary channel access controller 105 controls the operation of the non-primary channel access. For example, non-primary channel access controller 105 configures the non-primary channel access control information (NPCA control information) of the BSS based on the information related to the capability of STA 200 included in the decoded data signal input from data decoder 104. The non-primary channel access control information may include, for example, information related to a channel that can be used for the non-primary channel access, an operation method for the non-primary channel, carrier sense control information in the secondary channel, and information related to a transmission/reception period length (or operation available time) in the non-primary channel access. Non-primary channel access controller 105 outputs the non-primary channel access control information to carrier sensor 106 and scheduler 107.

Carrier sensor 106 performs the carrier sense based on the non-primary channel access control information (e.g., information related to the carrier sense in the secondary channel) input from non-primary channel access controller 105. Carrier sensor 106 outputs the channel medium information (e.g., carrier sense result (busy or idle) of each channel) obtained by the carrier sense of the primary channel and the secondary channel to scheduler 107.

Scheduler 107 performs the scheduling based on the channel medium information input from carrier sensor 106. For example, when the channel medium information includes a channel in which the channel medium is idle, scheduler 107 determines the scheduling information for transmitting the signal to STA 200 or the scheduling information for transmitting the signal (e.g., the trigger frame) prompting STA 200 to transmit the uplink signal, based on the information input from data decoder 104 or the non-primary channel access information input from non-primary channel access controller 105. Scheduler 107 outputs the scheduling information to data generator 108, data encoder 109, data modulator 110, and preamble generator 111. The scheduling information may include, for example, at least one of destination information, MCS and an error correction code, transmission power, and/or information related to a transmission/reception period length.

Further, for example, in a case where the channel medium information does not include a channel in which the channel medium is idle (e.g., when the channel medium of all the channels is busy), scheduler 107 stops scheduling and does not output the information to data generator 108, data encoder 109, data modulator 110, and preamble generator 111.

Data generator 108 generates a data sequence to be transmitted to STA 200 based on the scheduling information input from scheduler 107.

For example, the data sequence to be transmitted to STA 200 may include a management frame signal (e.g., a beacon signal, probe response signal, or association signal) including the non-primary channel access control information, the RTS, the BSRP, a trigger frame signal requesting STA 200 to transmit an uplink signal, and a response signal to the uplink signal of STA 200. Data generator 108 outputs the data sequence to data encoder 109.

Data encoder 109 performs encoding on the data series input from data generator 108 based on the scheduling information input from scheduler 107 and outputs the encoded data to data modulator 110.

Data modulator 110 performs modulation and inverse Fourier transform (IFFT) on the encoded data signal input from data encoder 109, based on the scheduling information input from scheduler 107 and outputs the modulated data signal to radio transmitter 112.

Preamble generator 111 generates a preamble signal based on the scheduling information input from scheduler 107. Preamble generator 111 performs modulation and IFFT processing on the preamble signal and outputs the preamble signal to radio transmitter 112.

Radio transmitter 112 generates a radio frame (also referred to as a packet signal) by adding the preamble signal input from preamble generator 111 to the modulated data signal input from data modulator 110. Radio transmitter 112 performs radio transmission processing on the radio frame, such as digital-to-analog (D/A) conversion and upconversion for a carrier frequency and transmits the signal after the radio transmission processing to STA 200 via an antenna.

### [Configuration Example of STA 200]

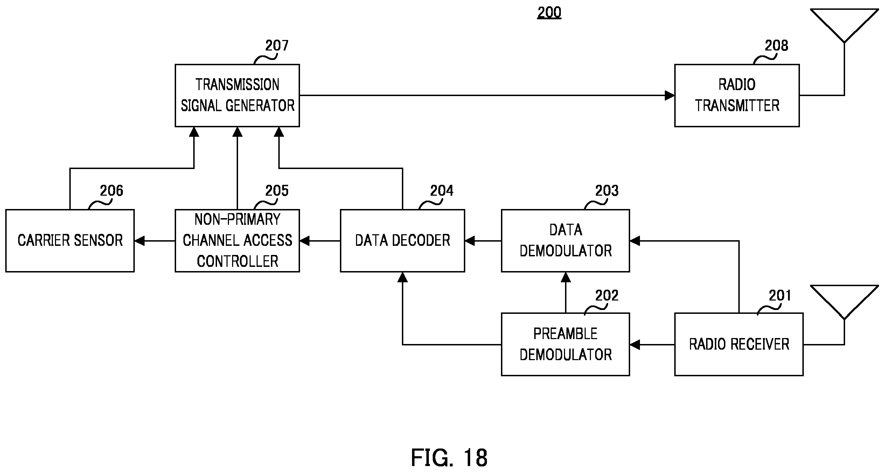

FIG. 18 is a block diagram illustrating a configuration example of STA 200 (e.g., a downlink radio reception apparatus).

STA 200 illustrated in FIG. 18 may include, for example, radio receiver 201, preamble demodulator 202, data demodulator 203, data decoder 204, non-primary channel access controller 205, carrier sensor 206, transmission signal generator 207, and radio transmitter 208.

At least one of preamble demodulator 202, data demodulator 203, data decoder 204, non-primary channel access controller 205, and/or transmission signal generator 207 illustrated in FIG. 18 may be included in the controller illustrated in FIG. 7, and radio receiver 201 illustrated in FIG. 18 may be included in the receiver illustrated in FIG. 7.

In FIG. 18, radio receiver 201 receives a signal transmitted from AP 100 via the antenna. Radio receiver 201 performs radio reception processing on the received signal, such as downconversion and A/D conversion. Radio receiver 201 outputs a preamble signal extracted from the received signal after the radio reception processing to preamble demodulator 202, and outputs a data signal extracted from the received signal after the radio reception processing to data demodulator 203.

Preamble demodulator 202 performs FFT on the preamble signal input from radio receiver 201, and extracts reception control information (e.g., BW, MCS, and error correction code) used for demodulation and decoding of the data signal (or the data portion). Further, preamble demodulator 202 performs channel estimation based on a reference signal included in the preamble signal and derives a channel estimation value. Preamble demodulator 202 outputs the reception control information to data demodulator 203 and data decoder 204, and outputs the channel estimation value to data demodulator 203.

Data demodulator 203 performs FFT on the data signal input from radio receiver 201, demodulates the data signal using the reception control information and the channel estimation value input from preamble demodulator 202, and outputs the demodulated data signal to data decoder 204.

Data decoder 204 decodes the demodulated data signal input from data demodulator 203 using the reception control information input from preamble demodulator 202. Data decoder 204 performs error determination on the decoded data signal using a method such as CRC, for example. When there is no error in the decoded data signal, data decoder 204 outputs the decoded data signal to non-primary channel access controller 205 and transmission signal generator 207.

Non-primary channel access controller 205 acquires, for example, information on a channel that can be used for the non-primary channel access, an operation method (or operation type) of the non-primary channel, carrier sense control information in the secondary channel, or a transmission/reception period length (operatable time) in the non-primary channel access from the non-primary channel access control information (NPCA control information) included in the decoded data signal input from data decoder 204, and stores the information in a buffer. Non-primary channel access controller 205 outputs, from the non-primary channel access control information, information related to the scheduling (e.g., information on channel that can be used for the non-primary channel access, and the transmission/reception period length) to transmission signal generator 207. Further, non-primary channel access controller 205 outputs, from the non-primary channel access control information, information related to the carrier sense (e.g., the channel information that can be used for the non-primary channel access, the non-primary channel operation method, and the carrier sense control information in the secondary channel) to carrier sensor 206.

Carrier sensor 206 performs the carrier sense based on the non-primary channel control information input from non-primary channel access controller 205. Carrier sensor 206 outputs the channel medium information obtained by the carrier sense of the primary channel and the secondary channel to transmission signal generator 207.

Transmission signal generator 207 generates a data sequence to be transmitted to the destination, AP 100 based on the decoded data signal input from data decoder 204. For example, the data sequence to be transmitted to the destination, AP 100 may include a probe request signal, an association request signal, a response signal (e.g., referred to as an acknowledge (ACK) or a block ACK (BA)) to a signal received from AP 100, or a CTS signal.

Further, in a case where the decoded data signal input from data decoder 204 includes a trigger frame requesting transmission of an uplink signal, transmission signal generator 207 generates a data sequence to be transmitted by using a trigger-based physical layer convergence protocol data unit (TB PPDU) based on the control information included in the trigger frame.

Transmission signal generator 207 performs encoding on the generated data sequence. Further, transmission signal generator 207 assigns the encoded data sequence to a frequency resource determined based on the channel medium information input from non-primary channel access controller 205, and performs modulation and IFFT processing to generate a data signal. Transmission signal generator 207 generates a radio frame by adding a preamble signal to the data signal and outputs the radio frame to radio transmitter 208.

Radio transmitter 208 performs radio transmission processing such as D/A conversion or upconversion for a carrier frequency on the radio frame input from transmission signal generator 207 and transmits the signal after the radio transmission processing to AP 100 via the antenna.

The configuration examples of AP 100 and STA 200 have been described above.

Next, an example of a non-primary channel access control method based on NPCA control information will be described.

For example, the NPCA control information may include an enhanced distributed channel access (EDCA) parameter that is different between the primary channel and the secondary channel. The EDCA parameter may include, for example, at least one of a Contention Window (CW), a CCA threshold value, and/or a TXOP limit. For example, the EDCA parameter of the primary channel and the secondary channel may be different for each access category.

### [Method 1]

In Method 1, the NPCA control information includes a parameter (e.g., EDCA parameter) related to the backoff in the secondary channel. For example, the backoff-related parameter is configured such that an average backoff time in the secondary channel is larger than an average backoff time in the primary channel.

For example, the backoff-related parameter includes a contention window (CW). The CW is selected in a range between a minimum value "CWmin" of the CW and a maximum value "CWmax" of the CW. Further, the backoff time is randomly determined in a range of 0 to the CW.

In Method 1, the backoff time of the secondary channel for each access category is randomly selected from a range in which a predetermined offset is added to at least one of the CWmin and/or the CWmax. As described above, the backoff time in the secondary channel may be a time determined based on the CW (e.g., CWmin and CWmax) of the primary channel to which the offset value is added.

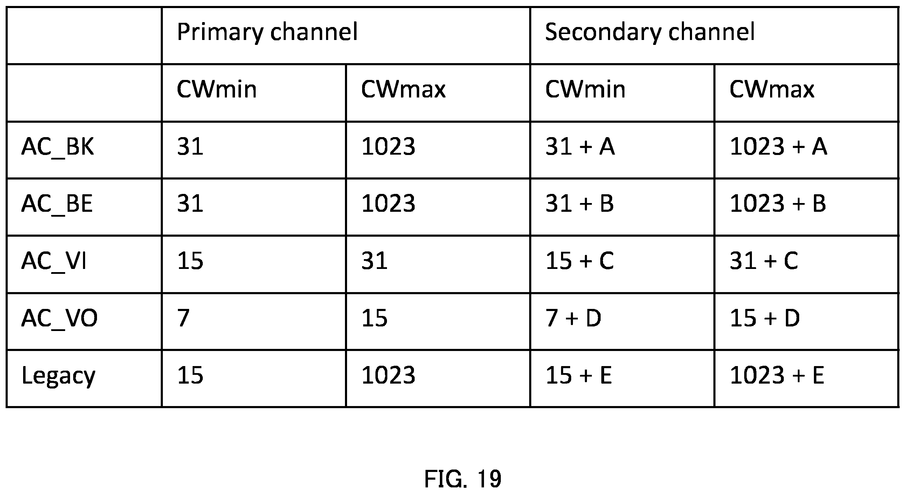

FIG. 19 illustrates a configuration example of the CWmin and the CWmax of each of the primary channel and the secondary channel. The unit of CW in the example illustrated in FIG. 19 is a slot time. Offset values A, B, C, D, and E of the CWmin and the CWmax for the secondary channel illustrated in FIG. 19 may be the same value or different values. Further, the offset values A, B, C, D, and E may be fixed values or variable values. For example, in FIG. 19, the size of the CW (CWmin and CWmax) may be primary channel CWmin < secondary channel CWmin < primary channel CWmax < secondary channel CWmax.

Alternatively, for example, the backoff-related parameter may include an offset value (e.g., referred to as a CW offset) to be added to the randomly selected backoff time. For example, the backoff time may be determined by using the same CW (e.g., CWmin and CWmax) between the primary channel and the secondary channel, and the CW offset may be added to the backoff time of the secondary channel. As described above, the backoff time in the secondary channel may be a time obtained by adding the CW offset value to the randomly selected backoff time. The CW offset value may be a fixed value or a variable value.

For example, in the non-primary channel access, the backoff time of the secondary channel may be configured to a value obtained by adding the CW offset to an initial value of a backoff counter randomly determined in a range of 0 to the CW. The unit of the CW offset may be a slot time or may be microseconds.

Further, for example, in a case of performing the channel switching in the non-primary channel access, the CW offset may be added to the backoff time of the secondary channel.

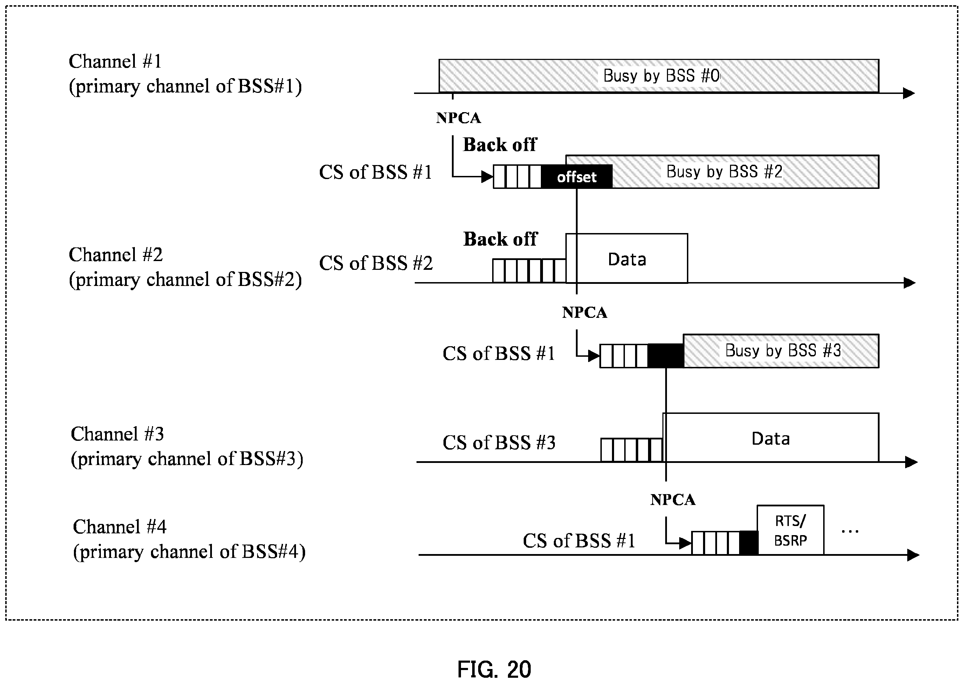

Further, for example, in a case of performing the channel switching a plurality of times in the non-primary channel access, the CW offset to be added to the backoff time may be configured according to the number of times of the channel switching. For example, the CW offset to be added to the backoff time may be configured to be smaller as the number of times of channel switching becomes larger. For example, as illustrated in FIG. 20, in a case where the channel switching of channel#1 → channel#2, channel#2 → channel#3, and channel#3 → channel#4 is performed by the non-primary channel access, the CW offset may be configured to be smaller each time the channel switching is performed. For example, when N secondary channels that can be used in the non-primary channel access are present, an M is configured as the CW offset value used in the first channel switching. In this case, the CW offset value used in the second channel switching may be M/2, the CW offset value used in the third channel switching may be M/4, the CW offset value may be halved each time the channel switching is performed, and the CW offset value used in the N-th channel switching may be configured to 0.

With Method 1, the AP/STA that uses the channel as the primary channel is likely to select a smaller backoff time than the AP/STA that performs the non-primary channel access by using the channel as the secondary channel. As a result, the AP/STA that does not support the non-primary channel access can transmit with higher priority than the AP/STA that supports the non-primary channel access, so that fairness of the transmission opportunity can be ensured.

### [Method 2]

In Method 2, the NPCA control information includes a parameter (e.g., EDCA parameter) related to a CCA threshold value in the secondary channel. For example, the CCA threshold value of the secondary channel is configured to be smaller than the CCA threshold value of the primary channel.

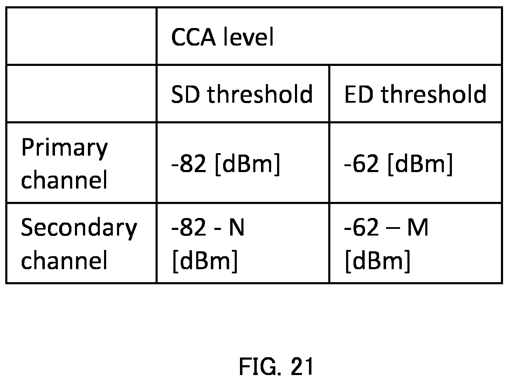

FIG. 21 illustrates a configuration example of a CCA threshold value according to Method 2.

For example, as illustrated in FIG. 21, the SD threshold value of the secondary channel is configured to a value (e.g., -82 - N [dBm]) that is lower than the SD threshold value (e.g., -82 [dBm]) of the primary channel by N [dBm]. As a result, in the AP/STA, when a signal different from the Wi-Fi standards is received in the secondary channel, it is likely to be determined that the channel medium = busy as compared with the primary channel.

Further, for example, as illustrated in FIG. 21, the ED threshold value of the secondary channel is configured to a value (e.g., -62 - M [dBm]) that is lower than the ED threshold value (e.g., -62 [dBm]) of the primary channel by M [dBm]. As a result, in the AP/STA, in the secondary channel, it is likely to be determined that the channel medium = busy as compared with the primary channel.

In FIG. 21, the values of the offset values N and M may be the same or different from each other. Further, the offset values N and M may be fixed values or variable values.

Further, the SD threshold value and the ED threshold value of the secondary channel used in the non-primary channel access may be defined separately from the SD threshold value and the ED threshold value of the secondary channel used in the channel bonding.

Further, in the NPCA, a bandwidth (e.g., 20 MHz) of a channel (e.g., an alternative primary channel) on which the physical/virtual carrier sense (e.g., the backoff operation) is performed and a bandwidth (e.g., 20/40/80/160/320 MHz) of a channel (e.g., the NPCA channel) on which the frame transmission is performed may be different. When the AP/STA performs the NPCA, the AP/STA may perform the CCA using the SD threshold value and the ED threshold value of the secondary channel used in the non-primary channel access in the alternative primary channel, and may perform the CCA using the SD threshold value and the ED threshold value of the secondary channel used in the channel bonding in each 20 MHz channel included in the NPCA channel excluding the alternative primary channel.

Further, in FIG. 21, a method for reducing the constant offset value from the SD threshold value and the ED threshold value of the secondary channel has been described, but the present disclosure is not limited to this. For example, a constant offset may be added to the SD threshold value and the ED threshold value of the primary channel. In this case, the CCA threshold value of the secondary channel may be configured to the SD threshold value and the ED threshold value (e.g., in the example of FIG. 21, the SD threshold value = -82 [dBm], and the ED threshold value = -62 [dBm]) of the primary channel before the offset is added.

With Method 2, the AP/STA that uses the channel as the primary channel is likely to recognize the channel medium = idle and can acquire the transmission right as compared with the AP/STA that performs the non-primary channel access by using the channel as the secondary channel, so that fairness of the transmission opportunity can be ensured.

### [Method 3]

In Method 3, the NPCA control information includes a parameter (e.g., EDCA parameter) related to the maximum transmission/reception period length (TXOP limit) of the secondary channel. For example, the TXOP limit of the secondary channel is configured to be smaller than the TXOP limit of the primary channel.

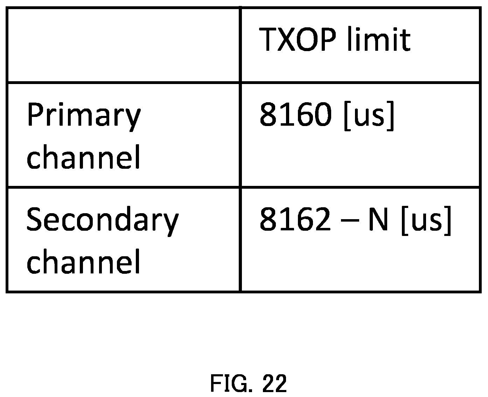

FIG. 22 illustrates a configuration example of the TXOP limit according to Method 3.

As illustrated in FIG. 22, the TXOP limit of the secondary channel may be configured to be smaller than the TXOP limit of the primary channel by an offset N [us], for example. The offset N may be a fixed value or a variable value.

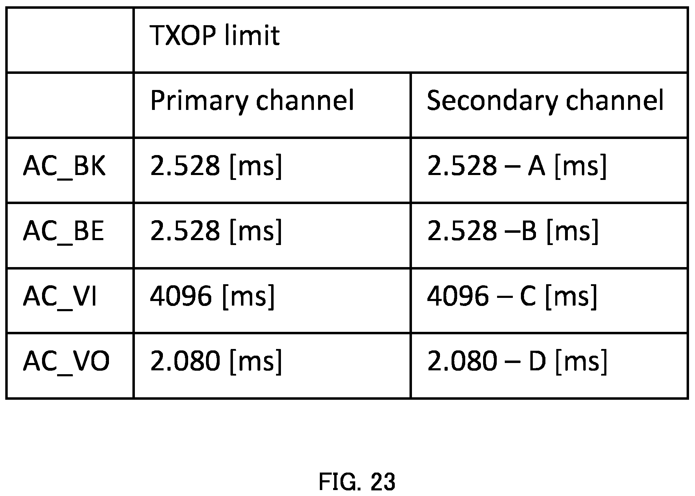

Further, the TXOP limit of the secondary channel may be configured to be smaller than the TXOP limit of the primary channel by an offset A, B, C, D [ms] for each access category, for example, as illustrated in FIG. 23. Offset values A, B, C, D of the secondary channel illustrated in FIG. 23 may be the same value or different values. Further, the offset values A, B, C, D may be fixed values or variable values.

With Method 3, the AP/STA that uses the channel as the primary channel can use the channel for a longer time length than the AP/STA that performs the non-primary channel access by using the channel as the secondary channel, so that fairness of the transmission opportunity can be ensured.

The example of the non-primary channel access control method based on the NPCA control information has been described above.

As described above, in the present embodiment, AP 100 transmits the NPCA control information related to the non-primary channel access using the channel (e.g., the secondary channel) that does not include the primary channel to STA 200. AP 100 and STA 200 control the transmission or the reception in the non-primary channel access based on the NPCA control information. As a result, the AP/STA can appropriately control the non-primary channel access based on the NPCA control information.

Further, for example, in the present embodiment, different parameters may be applied between the primary channel and the secondary channel in the NPCA control information. For example, the parameters of the primary channel and the secondary channel may be configured such that the transmission opportunity of the AP/STA that uses a certain channel as the primary channel is larger than the transmission opportunity of the AP/STA that uses the channel as the secondary channel. As a result, fairness of the transmission opportunities between the AP/STA that supports the non-primary channel access and the AP/STA that does not support the non-primary channel access can be maintained.

As described above, according to the present embodiment, the efficiency of the channel access control in radio communication can be improved.

Each embodiment of the present disclosure has been described thus far.

At least two of Methods 1 to 3 described above can be applied in combination.

Further, in the above-described embodiment, a case where AP 100 determines the secondary channel used in the non-primary channel access and notifies STA 200 of the secondary channel has been described, but AP 100 may determine the secondary channel based on quality information related to the secondary channel notified from STA 200. For example, channel quality information (CQI) report information may be used as the quality information related to the secondary channel, and average SNR information of the channel in units of 20 MHz may be notified. Further, AP 100 may notify STA 200 of the priority of the secondary channel recommended to be used in the non-primary channel access as illustrated in FIGS. 13 and 14. Further, STA 200 may include the quality information related to the secondary channel in at least one of a probe request signal and/or an association request signal and may notify AP 100 of the quality information. AP 100 may determine the secondary channel used in the non-primary channel access or the priority of using the secondary channel based on the CQI report information transmitted by STA 200. Further, AP 100 may transmit a signal (e.g., Null Data PPDU (NDP) Announcement) requesting STA 200 to transmit the quality information related to the secondary channel.

Further, in the above-described embodiment, a case where different EDCA parameters are applied to the primary channel and the secondary channel has been described, but different default EDCA parameters may be applied to the primary channel and the secondary channel. For example, the default EDCA parameter of the primary channel and the secondary channel for each access category may be different depending on the PHY version of the AP/STA.

Further, in Methods 1 to 3 described above, for example, in a case of transmitting a low-latency signal by using the secondary channel, the same EDCA parameter (or default EDCA parameter) as the primary channel may be applied to the secondary channel. For example, in a case where a signal of an access category designated as a low-latency signal is transmitted by using the secondary channel in a restricted-target wake time (R-TWT), the same backoff-related parameter, CCA threshold value, or TXOP limit as the primary channel may be applied to the secondary channel. In a case where a signal (e.g., a signal of best effort access category) that is not designated as a low-latency signal is transmitted by using the secondary channel, at least one of Methods 1 to 3 may be applied, and the transmission priority may be reduced as compared with the primary channel.

Further, in Methods 1 and 3 described above, different default EDCA parameters may be applied between the primary channel and the secondary channel. For example, the CWmin and the CWmax used in the secondary channel and the default EDCA parameter may be different depending on the PHY version of the AP/STA.

Further, in the above-described embodiment, a case where AP 100 notifies all the STAs 200 in the BSS of the non-primary channel access control information has been described, but the present disclosure is not limited to this. For example, the non-primary channel access control information may be notified in units of groups. For example, a group including at least one STA may be defined based on the capability of STA 200, and a non-primary channel access operation method that can be used for each capability or a secondary channel used in the non-primary channel access may be determined and notified.

Further, in the above-described embodiment, the non-primary channel access control information may be determined for each link used in multi-link. For example, the transmission priority of the primary channel and the transmission priority of the secondary channel may be configured to be the same for the link for the low-latency signal for which the access category that allows transmission is limited. In this case, the offset value is not added to the secondary channel as in Methods 1 to 3.

Further, in the above-described embodiment, the secondary channel used in the non-primary channel access may be configured (or limited) to be spaced from the primary channel by a constant channel interval. For example, the primary channel and the secondary channel may be configured (or limited) to be spaced by an 80 MHz interval. As a result, for example, in a case where the primary channel and the secondary channel are adjacent to each other, it is possible to avoid a case where the transmission cannot be performed because the primary channel and the secondary channel are used by the same OBSS.

Further, in the above-described embodiment, the secondary channel used for the non-primary channel access may be determined in coordination between APs. For example, AP 100 may determine the secondary channel used for the non-primary channel access based on the channel number of the secondary channel included in the management frame transmitted by another AP. For example, a channel different from the primary channel and the secondary channel used by the OBSS may be selected as the primary channel and the secondary channel. Further, for example, when performing multi-AP coordinated communication, an AP that manages the coordinated control may determine the primary channel and the secondary channel of another coordination AP.

The non-primary channel access may be applied (or limited) in Multi-AP coordinated communication in which a plurality of APs perform transmission in coordination, for example.

An access category (e.g., a low-latency signal) that can use the non-primary channel access may be configured (or limited).

The non-primary channel access may be applied (or limited) in a case where AP 100 acquires the TXOP in the secondary channel.

Further, in the above-described embodiment, the values of the bandwidths of the channels (primary channel and secondary channel), the CW (e.g., CWmin and CWmax), the CCA threshold values (e.g., SD threshold value and ED threshold value), and the TXOP limit are examples, and other values may be used.

Further, the non-primary channel access is also referred to as Secondary channel access (SCA).

Further, in each of the above-described embodiments, the field (or subfield) used for the indication of the control information is merely an example, and another field or subfield may be used. Further, the number of bits used for the indication of the control information in each field or subfield is merely an example, and another number of bits may be used.

Further, the format of the signal described in each of the above embodiments is merely an example, and another configuration may be employed in which at least one of the addition of another field and the deletion of some of the fields is performed, or another configuration may be employed in which at least one of the addition of another subfield and the deletion of some of the subfields is performed in any of the above-described fields.

Furthermore, in each embodiment described above, as an example, a case based on the format defined in IEEE 802.11 has been described, but the format to which an embodiment of the present disclosure is applied is not limited to the format of IEEE 802.11.

The present disclosure can be realized by software, hardware, or software in cooperation with hardware. Each functional block used in the description of each embodiment described above can be partly or entirely realized by an LSI such as an integrated circuit, and each process described in each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on the difference in the degree of integration.

However, the technique of implementing an integrated circuit is not limited to the LSI and may be realized by using a dedicated circuit, a general-purpose processor, or a special-purpose processor. Further, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a radio LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

An access point according to one exemplary embodiment of the present disclosure includes: transmission circuitry, which, in operation, transmits control information related to communication using a channel not including a first channel, the channel being referred to as a second channel, the first channel being a primary channel; and control circuitry, which, in operation, controls transmission or reception in the communication based on the control information.

In one exemplary embodiment of the present disclosure, the transmission circuitry transmits the control information by using a Management frame.

In one exemplary embodiment of the present disclosure, the control information includes information related to the second channel used in the communication.

In one exemplary embodiment of the present disclosure, the information related to the second channel includes information related to at least one of a plurality of the second channels for each band.

In one exemplary embodiment of the present disclosure, the second channel includes a channel within an operating channel band or a channel outside the operating channel band.

In one exemplary embodiment of the present disclosure, the information related to the second channel includes a channel number of the second channel or an offset value from the first channel.

In one exemplary embodiment of the present disclosure, the control information includes information related to a priority of each of a plurality of the second channels that is usable in the communication.

In one exemplary embodiment of the present disclosure, the control information includes information related to an operation type of the communication.

In one exemplary embodiment of the present disclosure, the operation type includes at least one of a type in which the communication is performed in a case where a backoff time of the second channel becomes 0 and/or a type in which the communication is performed in a case where a carrier sense result of the first channel is busy and the backoff time of the second channel becomes 0.

In one exemplary embodiment of the present disclosure, an operation of the communication is determined according to a capability of the access point and a terminal.

In one exemplary embodiment of the present disclosure, the control information includes information related to an operatable time of the communication.

In one exemplary embodiment of the present disclosure, the operatable time is configured to a period not greater than a transmission prohibited period in the first channel.

In one exemplary embodiment of the present disclosure, the control information includes a parameter that is different between the first channel and the second channel.

In one exemplary embodiment of the present disclosure, the parameter is an Enhanced Distributed Channel Access (EDCA) parameter or a default EDCA parameter.

In one exemplary embodiment of the present disclosure, the parameter is a parameter related to backoff in the second channel.

In one exemplary embodiment of the present disclosure, an average backoff time in the second channel is longer than an average backoff time in the first channel.

In one exemplary embodiment of the present disclosure, a backoff time in the second channel is a time resulting from addition of a first offset to a randomly selected backoff time or a time selected based on a second CW resulting from addition of a second offset to a first Content Window (CW) of the first channel.

In one exemplary embodiment of the present disclosure, the first offset is configured to be smaller as the number of times of channel switching becomes larger.

In one exemplary embodiment of the present disclosure, the parameter is a parameter related to a Clear Channel Access (CCA) threshold value in the second channel.

In one exemplary embodiment of the present disclosure, the CCA threshold value in the second channel is smaller than the CCA threshold value in the first channel.

In one exemplary embodiment of the present disclosure, the parameter is a parameter related to a maximum transmission and reception period length in the second channel.

In one exemplary embodiment of the present disclosure, the maximum transmission and reception period length in the second channel is shorter than the maximum transmission and reception period length in the first channel.

A terminal according to one exemplary embodiment of the present disclosure includes: reception circuitry, which, in operation, receives control information related to communication using a channel not including a first channel, the channel being referred to as a second channel, the first channel being a primary channel; and control circuitry, which, in operation, controls reception or transmission in the communication based on the control information.

A communication method according to one exemplary embodiment of the present disclosure includes: transmitting, by an access point, control information related to communication using a channel not including a first channel, the channel being referred to as a second channel, the first channel being a primary channel; and controlling, by the access point, transmission or reception in the communication based on the control information.

A communication method according to one exemplary embodiment of the present disclosure includes: receiving, by a terminal, control information related to communication using a channel not including a first channel, the channel being referred to as a second channel, the first channel being a primary channel; and controlling, by the terminal, reception or transmission in the communication based on the control information.

The disclosure content of the specification, drawings, and abstract included in Japanese Patent Application No. 2023-145581 filed on September 7, 2023 is incorporated herein by reference into the present application in its entirety.

### Industrial Applicability

One exemplary embodiment of the present disclosure is useful for radio communication systems.

### Reference Signs List

100 AP
101, 201 Radio receiver
102, 202 Preamble demodulator
103, 203 Data demodulator
104, 204 Data decoder
105, 205 Non-primary channel access controller
106, 206 Carrier sensor
107 Scheduler
108 Data generator
109 Data encoder
110 Data modulator
111 Preamble generator
112, 208 Radio transmitter
200 STA
207 Transmission signal generator

## Claims

1. An access point, comprising:
transmission circuitry, which, in operation, transmits control information related to communication using a channel not including a first channel, the channel being referred to as a second channel, the first channel being a primary channel; and
control circuitry, which, in operation, controls transmission or reception in the communication based on the control information.

2. The access point according to claim 1, wherein, the transmission circuitry transmits the control information by using a Management frame.

3. The access point according to claim 1, wherein, the control information includes information related to the second channel used in the communication.

4. The access point according to claim 3, wherein, the information related to the second channel includes information related to at least one of a plurality of the second channels for each band.

5. The access point according to claim 3, wherein, the second channel includes a channel within an operating channel band or a channel outside the operating channel band.

6. The access point according to claim 3, wherein, the information related to the second channel includes a channel number of the second channel or an offset value from the first channel.

7. The access point according to claim 1, wherein, the control information includes information related to a priority of each of a plurality of the second channels that is usable in the communication.

8. The access point according to claim 1, wherein, the control information includes information related to an operation type of the communication.

9. The access point according to claim 8, wherein, the operation type includes at least one of a type in which the communication is performed in a case where a backoff time of the second channel becomes 0 and/or a type in which the communication is performed in a case where a carrier sense result of the first channel is busy and the backoff time of the second channel becomes 0.

10. The access point according to claim 8, wherein, an operation of the communication is determined according to a capability of the access point and a terminal.

11. The access point according to claim 1, wherein, the control information includes information related to an operatable time of the communication.

12. The access point according to claim 1, wherein, the control information includes a parameter that is different between the first channel and the second channel.

13. A terminal, comprising:
reception circuitry, which, in operation, receives control information related to communication using a channel not including a first channel, the channel being referred to as a second channel, the first channel being a primary channel; and
control circuitry, which, in operation, controls reception or transmission in the communication based on the control information.

14. A communication method, comprising:
transmitting, by an access point, control information related to communication using a channel not including a first channel, the channel being referred to as a second channel, the first channel being a primary channel; and
controlling, by the access point, transmission or reception in the communication based on the control information.

15. A communication method, comprising:
receiving, by a terminal, control information related to communication using a channel not including a first channel, the channel being referred to as a second channel, the first channel being a primary channel; and
controlling, by the terminal, reception or transmission in the communication based on the control information.
